# EUROPEAN PATENT SPECIFICATION

(11) **EP 2 512 827 B1**
(45) Date of publication and mention of the grant of the patent: **11.06.2014**
(21) Application number: 10795635.1
(22) Date of filing: 29.11.2010
(51) Int. Cl.: B60C 9/20, B60C 5/14, B60C 3/06, B60C 9/28, B60C 9/30, B60C 11/03

(54) **TYRE THE CROWN OF WHICH HAS A STIFFENING REINFORCEMENT**
REIFEN MIT ZENIT MIT VERSTEIFUNGSVERSTÄRKUNG
PNEU DONT LE SOMMET EST MUNI D'UN RENFORT DE RAIDISSEMENT

(30) Priority: 14.12.2009 FR 0958929; 10.03.2010 US 312585 P
(43) Date of publication of application: 24.10.2012
(73) Proprietor: Compagnie Générale des Etablissements Michelin, 63000 Clermont-Ferrand (FR); MICHELIN Recherche et Technique S.A., 1763 Granges-Paccot (CH)
(72) Inventor: FUGIER, Sébastien, F-63040 CLERMONT-FERRAND Cedex 9 (FR)
(74) Representative: Sidhu, Alban
(86) International application number: PCT/EP2010/068426
(87) International publication number: WO 2011/073022

(56) References cited:
- EP-A1- 2 033 810
- EP-A2- 2 332 744
- DE-A1- 3 621 646
- DE-A1-102005 050 675
- JP-A- 2005 254 993

## Description

### FIELD OF THE INVENTION

The present invention relates to tyres for passenger vehicles. It relates more particularly to tyres suited to sporty driving.

### BACKGROUND

Under sporty driving conditions, tyres experience significant transverse loads, particularly when the vehicle fitted with the tyres enters a bend. These transverse loads cause the contact area where each tyre makes contact with the ground on which it is driving to become trapezoidal, i.e. that side of the contact area that lies on the side of the vehicle that is on the outside (with respect to the centre) of the bend lengthens, whereas that side of the contact area which lies closer to the centre of the bend shortens. As a result, the various ribs on the tread sustain different loads. It is the most heavily loaded ribs which bear the greater proportion of the transverse load. They, therefore, have a tendency to tilt and this has the effect of reducing the contact surface between the rib and the ground.

The combination of (i) the loss of area of the ribs that lie on the outside of the tyre with respect to the centre of the bend and of (ii) the increase in the load borne by these ribs results in the tread being damaged. For example, uneven wear of the edges of the ribs and loss of rubber compound can be observed.

One solution to this problem has been proposed in document EP 1 726 458 wherein an additional stiffening reinforcement extending axially over practically the entire width of the tread is provided. While this solution does reduce the phenomena of uneven wear, it has the effect of increasing the mass of the tyre and of deteriorating user comfort. A known tyre is disclosed in DE-A-102005050675.

Attention is also drawn to the document EP-A-2332744, which falls under Art. 54(3) EPC.

### SUMMARY OF THE INVENTION

One of the objectives of the present invention is to reduce the uneven wear of the tread of tyres designed for sporty driving and to improve their endurance while at the same time reducing to the absolute minimum the weight added to the tyre and the stiffening of the crown.

This objective is achieved through at least one narrow stiffening reinforcement astutely positioned under the crown of the tyre.

More specifically, the objective is achieved using a tyre configured to be mounted on a mounting rim of a wheel of a vehicle, comprising:
two beads configured to come into contact with the mounting rim, each bead comprising at least one annular reinforcing structure;
two sidewalls extending the beads radially outward, the two sidewalls meeting in a crown comprising a crown reinforcement surmounted by a tread comprising a rolling surface;
at least one carcass reinforcement extending from the beads through the sidewalls as far as the crown, the carcass reinforcement being anchored in the two beads;
wherein the tread is divided, by the median plane of the tyre, into:
a first semi-tread which extends axially from said median plane toward a first axial edge of the tread, the first semi-tread comprising a first main circumferential groove opening onto the rolling surface, and
a second semi-tread which extends axially from said median plane toward a second axial edge of the tread.

The tyre further comprises an additional stiffening reinforcement comprising a plurality of substantially radially directed thread-like reinforcing elements, that is to say thread-like reinforcing elements that make an angle greater than or equal to 60° (and preferably 80°) and less than or equal to 90° with the circumferential direction, this additional stiffening reinforcement being situated radially on the inside of the carcass reinforcement and in direct radial alignment with said first main circumferential groove.

The additional stiffening reinforcement extends axially on the outside of the axially outermost point of said first main circumferential groove, such that, in any radial cross section, the axial distance DEE1 between the axially outermost point of the additional stiffening reinforcement and the axially outermost point of said first main circumferential groove is less than or equal to 75% of an axial distance DAE1, this axial distance DAE1 being defined:
either, if there is no circumferential groove opening onto the rolling surface axially between said first main circumferential groove and said first axial edge of the tread, as the axial distance between the axially outermost point of said first main circumferential groove and said first axial edge of the tread,
or, if there is an additional circumferential groove opening onto the rolling surface axially between said first main circumferential groove and said first axial edge of the tread, as the axial distance between the axially outermost point of said first main circumferential groove and the axially innermost point of said additional circumferential groove.

Moreover, the additional stiffening reinforcement extends axially on the inside of the axially innermost point of said first main circumferential groove, such that, in any radial cross section, the axial distance DEI1 between the axially innermost point of the additional stiffening reinforcement and the axially innermost point of said first main circumferential groove is less than or equal to 75% of an axial distance DAI1, this axial distance DAI1 being defined:
either, if there is no circumferential groove opening onto the rolling surface axially between said first main circumferential groove and said second axial edge of the tread, as the axial distance between the axially innermost point of said first main circumferential groove and said second axial edge of the tread,
or, if there is an additional circumferential groove opening onto the rolling surface axially between said first main circumferential groove and said second axial edge of the tread, as the axial distance between the axially innermost point of said first main circumferential groove and that point of said additional circumferential groove that is axially closest to said first main circumferential groove.

Providing such an additional stiffening reinforcement astutely modifies the local flexural rigidity of the tread of the tyre and makes it possible to limit tread deformation in regions which have a tendency to lose contact with the ground. The increase in the local loading is therefore reduced, and so is the tread degradation.

According to the invention, the tread has an additional circumferential groove opening onto the rolling surface axially between said first main circumferential groove and said first axial edge of the tread, the axial distance DEE1 between the axially outermost point of the additional stiffening reinforcement and the axially outermost point of said first main circumferential groove is less than or equal to 50% of the axial distance between the axially outermost point of said first main circumferential groove and the axially innermost point of said additional circumferential groove. As a matter of fact, when there is an additional circumferential groove being situated axially between the first main circumferential groove and the first axial edge of the tread, it has been found to be advantageous to shorten the additional stiffening reinforcement on the side closer to the additional circumferential groove.

According to one advantageous embodiment, the carcass reinforcement comprises a plurality of carcass reinforcing elements and the carcass reinforcing elements are textile.

The thread-like reinforcing elements of the additional stiffening reinforcement are preferably textile, but could equally be made of metal. Preferably, the thread-like reinforcing elements of the additional stiffening reinforcement have an extension modulus greater than or equal to 1 GPa and the additional stiffening reinforcement has a reinforcing element density greater than or equal to 100 per dm.

When the tyre is an asymmetric tyre, as a result of its structure or of the composition of the tread, it has a predetermined direction of mounting. In other words, the tyre has a side which has to face the outside of the vehicle when the tyre is mounted on the vehicle. In this specific case, it is advantageous that the tyre has just one single additional stiffening reinforcement and that the first axial edge of the tread lies on that side of the tyre which, when the tyre is mounted on the vehicle in said predetermined direction of mounting, faces the outside of the vehicle.

By contrast, when the tyre is a tyre of the "directional" type, which means that it has a preferred direction of rotation, it is advantageous that the second semi-tread has a second main circumferential groove opening onto the rolling surface, the tyre further comprising a second additional stiffening reinforcement comprising a plurality of substantially radially directed thread-like reinforcing elements, this second additional stiffening reinforcement being situated radially on the inside of the carcass reinforcement and in direct radial alignment with said second main circumferential groove.

The second additional stiffening reinforcement extends axially on the outside of the axially outermost point of said second main circumferential groove, such that, in any radial cross section, the axial distance DEE2 between the axially outermost point of the second additional stiffening reinforcement and the axially outermost point of said second main circumferential groove is less than or equal to 75% of the axial distance DAE2, this axial distance DAE2 being defined:
either, if there is no circumferential groove axially between said second main circumferential groove and said second axial edge of the tread, as the axial distance between the axially outermost point of said second main circumferential groove and said second axial edge of the tread,
or, if there is an additional circumferential groove axially between said second main circumferential groove and said second axial edge of the tread, as the axial distance between the axially outermost point of said second main circumferential groove and the axially innermost point of said additional circumferential groove.

Furthermore, the second additional stiffening reinforcement extends axially on the inside of the axially innermost point of said second main circumferential groove, such that, in any radial cross section, the axial distance DEI2 between the axially innermost point of the second additional stiffening reinforcement and the axially innermost point of said second main circumferential groove is less than or equal to 75% of the axial distance DAI2, this axial distance DAI2 being defined:
either, if there is no circumferential groove axially between said second main circumferential groove and said first main circumferential groove, as the axial distance between the axially innermost point of said second main circumferential groove and the axially innermost point of said first main circumferential groove,
or, if there is an additional circumferential groove axially between said second main circumferential groove and said first main circumferential groove, as the axial distance between the axially innermost point of said second main circumferential groove and the point of this additional circumferential groove that is axially closest to said second main circumferential groove.

Providing a second main circumferential groove makes it possible for the tyre to be mounted on the vehicle without having to take care as to which side of the tyre said first main circumferential groove is situated on. Whichever side of the tyre lies on that side of the tyre that faces the outside of the vehicle when the tyre is mounted on the vehicle in said predetermined direction of mounting, there will be a circumferential groove associated with an additional stiffening reinforcement on the side of the tyre that faces the outside of the vehicle.

In a similar way to that which was explained in respect of the first main circumferential groove, it is then preferable to ensure that, when the tread is provided with an additional circumferential groove axially between said second main circumferential groove and said second axial edge of the tread, the axial distance DEE2 between the axially outermost point of the second additional stiffening reinforcement and the axially outermost point of said second main circumferential groove is less than or equal to 50% of the axial distance between the axially outermost point of said second main circumferential groove and the axially innermost point of said additional circumferential groove.

Of course, it is possible, and even desirable, to combine two or more of the embodiments described.

### BRIEF DESCRIPTION OF THE DRAWINGS

Figure 1 depicts a tyre according to the prior art.
Figure 2 depicts a partial perspective view of a tyre according to the prior art.
Figure 3 depicts, in radial cross section, one quarter of a tyre according to the prior art.
Figures 4 and 5 illustrate how the axial edge of a tread is determined.
Figures 6 to 9 schematically depict the deformation that a tyre according to the prior art undergoes when it experiences substantial transverse loading.
Figures 13 and 14 depict, in radial cross section, one portion of a tyre according to an embodiment of the invention. Figures 10 to 12 and 15 to 16 do not show tyres according to the invention but illustrate certain features of such tyres.
Figures 17 and 18 show the effect that the width of the additional stiffening reinforcement has on the deflection of a tyre.

### DETAILED DESCRIPTION OF THE DRAWINGS

When using the term "radial" it is appropriate to make a distinction between various different uses that the person skilled in the art makes of this word. Firstly, the expression refers to a radius of the tyre. It is in that sense that a point P1 is said to be "radially inside" a point P2 (or "radially on the inside of" the point P2) if it is closer to the axis of rotation of the tyre than is the point P2. Conversely, a point P3 is said to be "radially outside" a point P4 (or "radially on the outside of" the point P4) if it is further from the axis of rotation of the tyre than is the point P4. Progress "radially inward (or outward)" will mean progress toward smaller (or larger) radii. In terms of radial distances, it is this sense of the word that applies also.

A "radial direction" is a direction parallel to a radius of the tyre and that intersects the axis of rotation of the tyre.

Traditionally, the carcass reinforcement of a tyre extends from one bead to the other. In such cases, when the additional stiffening reinforcement is said to lie "radially on the inside of the carcass reinforcement" what that means is that the radial direction passing through any arbitrary point on the additional stiffening reinforcement has an intersection with the carcass reinforcement that is radially on the outside of the additional stiffening reinforcement. In the more rare case of a tyre the carcass reinforcement of which is interrupted at the crown region and which therefore comprises two axially separate portions, the additional stiffening reinforcement would be said to lie "radially on the inside of the carcass reinforcement" when, in any radial cross section, it lies radially on the inside of the line passing through the radially outermost point of each of the portions.

By contrast, a thread or a reinforcement is said to be "radial" when the thread or the reinforcing elements of the reinforcement make an angle greater than or equal to 80° and less than or equal to 90° with the circumferential direction. Let us specify that in this particular document, the term "thread" is to be understood in a very general sense of the word and encompasses threads in the form of monofilaments, multifilaments, a cord, a yarn or an equivalent assembly, irrespective of the material of which the thread is made or of the coating applied to it to enhance its bonding with the rubber.

Finally, a "radial cross section" or "radial section" here means a cross section or a section on a plane which contains the axis of rotation of the tyre.

An "axial" direction is a direction parallel to the axis of rotation of the tyre. A point P5 is said to be "axially inside" a point P6 (or "axially on the inside of" the point P6) if it is closer to the median plane of the tyre than is the point P6. Conversely, a point P7 is said to be "axially outside" a point P8 (or "axially on the outside of" the point P8) if it is further from the median plane of the tyre than is the point P8. The "median plane" of the tyre is the plane which is perpendicular to the axis of rotation of the tyre and which lies equal distances from the annular reinforcing structures of each bead.

A "circumferential" direction is a direction perpendicular both to a radius of the tyre and to the axial direction. A "circumferential section" is a section on a plane perpendicular to the axis of rotation of the tyre.

Two reinforcing elements are said to be "parallel" in this document when the angle formed between the two elements is less than or equal to 20°.

What is meant here by "rolling surface" is all the points on the tread of a tyre that come into contact with the ground when the tyre is rolling.

The expression "semi-tread" denotes each of the two portions of the tread which lie one on each side of the median plane of the tyre. Because the median plane does not necessarily divide the tread into two portions of equal axial width, the term "semi-tread" does not necessarily denote half of the tread.

A circumferential groove is said to be "main" when it is associated with an additional stiffening reinforcement. The term "main" does not therefore mean that such a circumferential groove is wider, deeper, etc. than some other groove, but serves solely to distinguish the grooves that lie in direct radial alignment with an additional stiffening reinforcement.

The expression "rubber compound" denotes a composition of rubber containing at least one elastomer and one filler.

To make the description of the variants shown with the figures easier to read, the same references are used to denote elements that have identical structures.

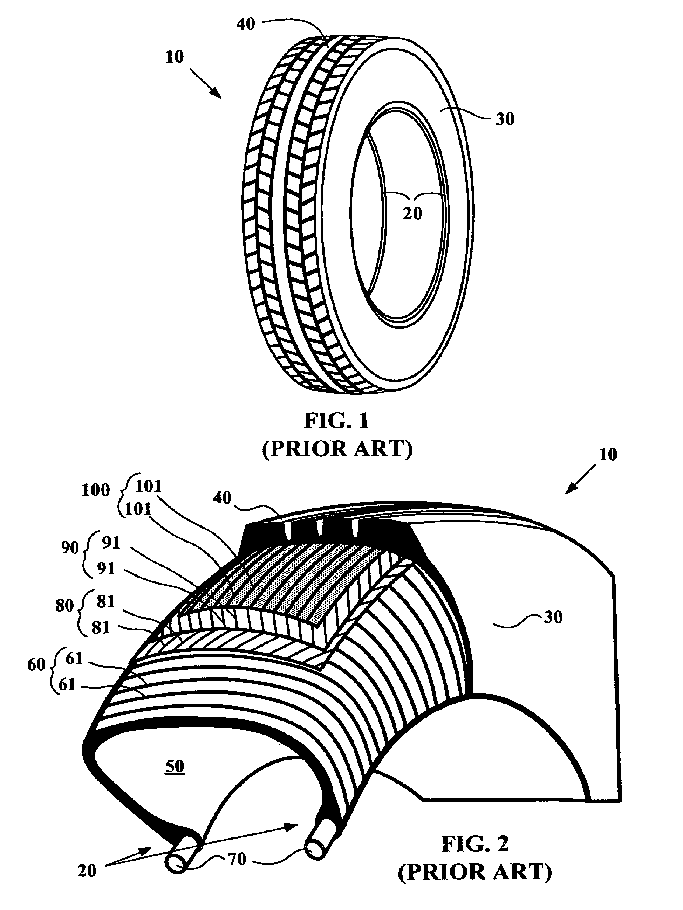

Figure 1 schematically depicts a tyre 10 according to the prior art. The tyre 10 comprises a crown comprising a crown reinforcement (not visible in Figure 1) surmounted by a tread 40, two sidewalls 30 extending the crown radially inwards, and two beads 20 radially inside of the sidewalls 30.

Figure 2 schematically depicts a partial perspective view of a tyre 10 according to the prior art and illustrates the various components of the tyre. The tyre 10 comprises a carcass reinforcement 60 made up of threads 61 coated with rubber compounds, and two beads 20 each comprising annular reinforcing structures 70 which hold the tyre 10 on the rim (not depicted). The carcass reinforcement 60 is anchored in each of the beads 20. The tyre 10 further comprises a crown reinforcement comprising two plies 80 and 90. Each of the plies 80 and 90 is reinforced with thread-like reinforcing elements 81 and 91 which are parallel within each layer and cross from one layer to the next, making angles ranging between 10° and 70° with the circumferential direction. The tyre further comprises a hooping reinforcement 100, arranged radially on the outside of the crown reinforcement, this hooping reinforcement being formed of circumferentially directed spiral-wound reinforcing elements 101. A tread 40 is laid on the hooping reinforcement; it is this tread 40 that provides contact between the tyre 10 and the road surface. The tyre 10 depicted is a "tubeless" tyre: it comprises an "inner liner" 50 made of a rubber compound impervious to the inflation gas, covering the interior surface of the tyre.

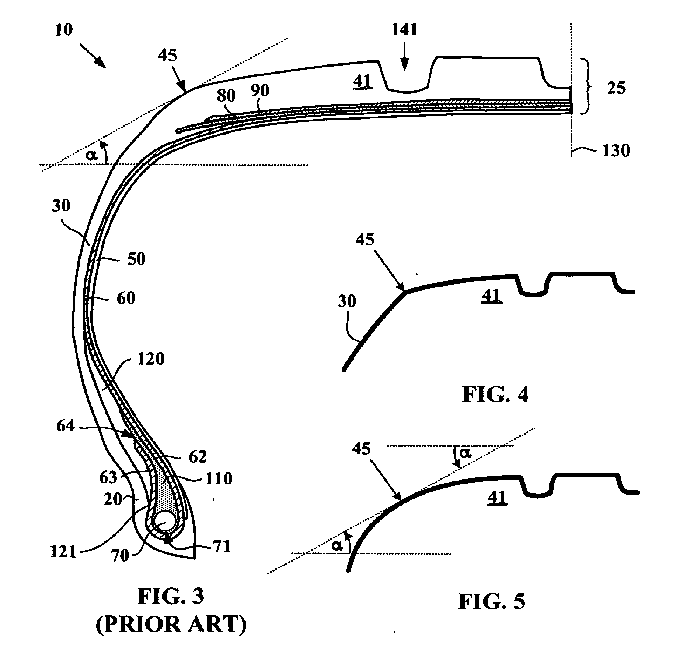

Figure 3 schematically depicts, in radial cross section, one quarter of a reference tyre 10 of the Energy™ Saver type commercialized by Michelin. The tyre 10 comprises two beads 20 configured to come into contact with a mounting rim (not depicted), each bead 20 comprising a bead wire 70. Two sidewalls 30 extend the beads 20 radially outwards and meet in a crown 25 comprising a crown reinforcement formed of a first layer of reinforcing elements 80 and of a second layer of reinforcing elements 90, and radially surmounted by a tread. The tread is divided, by the median plane 130 of the tyre, into a first semi-tread 41 which extends axially from the median plane 130 of the tyre toward a first axial edge 45 of the tread, the first semi-tread comprising a first circumferential groove 141 opening onto the rolling surface, and a second semi-tread (not depicted) that extends axially from said median plane 130 toward a second axial edge of the tread.

The way in which the axial edges of a tread are determined is illustrated in Figures 4 and 5 each of which shows the profile of a semi-tread 41 and of that part of the sidewall 30 that is adjacent to it. In some tyre designs, the transition from tread to sidewall is abrupt, as in the case depicted in Figure 4, and determining the axial edge 45 of the semi-tread 41 is obvious. However, there are tyre designs in which the transition between tread and sidewall is continuous. An example is given in Figure 5. The edge of the tread is then determined as follows. The tangent to the rolling surface of the tyre at any point on the rolling surface in the region of transition toward the sidewall is drawn onto a radial cross section of the tyre. The axial edge is the point at which the angle α (alpha) between said tangent and an axial direction is equal to 30°. When there are several points at which the angle α (alpha) between said tangent and an axial direction is equal to 30°, it is the radially outermost point that is adopted. In the case of the tyre depicted in Figure 3, the axial edge 45 has been determined in this way.

Each layer of reinforcing elements 80 and 90 comprises thread-like reinforcing elements, coated in a matrix formed of rubber compound. The reinforcing elements of each layer are substantially mutually parallel; the reinforcing elements of the two layers cross from one layer to the next at an angle of about 20° to 30°, as is well known to those skilled in the art for tyres known as radial tyres.

The tyre 10 further comprises a carcass reinforcement 60 which extends from the beads 20 through the sidewalls 30 as far as the crown 25. This carcass reinforcement 60 here comprises thread-like reinforcing elements that are directed radially, that is to say that make an angle greater than or equal to 80° and less than or equal to 90° with the circumferential direction.

The carcass reinforcement 60 comprises a plurality of carcass reinforcing elements shown as threads 61 in Fig. 2. The carcass reinforcement is anchored in the two beads 20 by wrapping around the bead wire 70, so as to form, in each bead, a main portion 62 and a wrapped-around portion 63. The wrapped-around portion extends radially to the outside as far as an end 64.

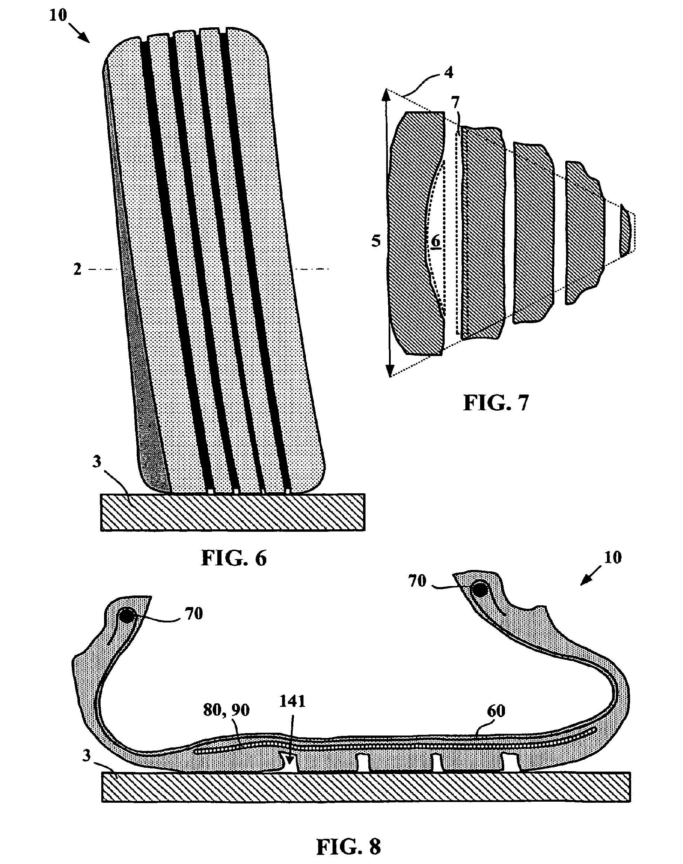

Figures 6 to 9 schematically depict the deformation of a tyre according to the prior art, inflated to 3 bar and heavily loaded (load of 7100 N) when it experiences substantial transverse loadings (camber: -4.4°, transversal slip rate: 3 m/s). Figure 6 corresponds to a view in the direction of forward travel of the tyre. The reference 2 indicates the axis of rotation of the tyre 10 and the reference 3 the ground on which the tyre 10 is rolling.

Figure 7 depicts the footprint of the tyre 10 on the ground 3. To a first approximation, this footprint is in the shape of a trapezium 4 the long side 5 of which is on that side of the vehicle on which the tyre 10 is mounted that lies on the outside with respect to the centre of the bend. As Figure 7 shows, the footprint of the outermost rib with respect to the centre of the bend is reduced. In the region that bears the reference 6, this rib is losing contact with the ground, and this has the effect of increasing the local loading in the region bearing the reference 7, that is to say in the vicinity of the corner edge of the adjacent rib.

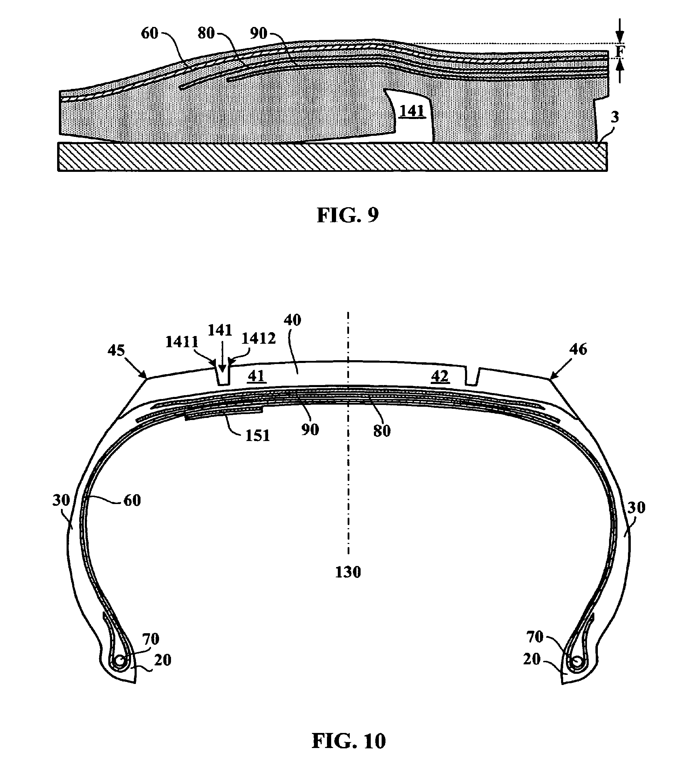

Figure 8 shows, in radial cross section, that part of the tyre 10 that is in contact with the ground 3. Figure 9 gives a detail of this view. The heavy deformation of the tread in proximity to the groove 141 can be seen, with a distinct loss of contact with the ground in the region axially on the outside of the groove 141. This loss of contact can occur because, in the vicinity of the groove, the crown of the tyre is experiencing a great deal of meridian flexing.

Given the magnitude of this flexing and of the deformation of the tread to which it leads, it can be understood that the tread wears unevenly.

The present invention seeks to reduce this uneven wear. The objective is achieved with a tyre according to an embodiment of the invention. The tyre depicted in Figure 10, which illustrates some features of a tyre according to the invention, has two beads 20 configured to come into contact with a mounting rim (not depicted), each bead comprising a bead wire 70, two sidewalls 30 extending the beads 20 radially outwards, the two sidewalls meeting in a crown comprising a crown reinforcement 80, 90 surmounted by a tread 40 comprising a rolling surface. The tyre 10 also comprises a carcass reinforcement 60 extending from the beads 20 through the sidewalls 30 as far as the crown, the carcass reinforcement being anchored in the two beads 20, in this instance by wrapping them around the bead wire 70.

The tread 40 is divided, by the median plane 130 of the tyre 10, into a first semi-tread 41 which extends axially from the median plane 130 toward a first axial edge 45 of the tread 40, the first semi-tread 41 comprising a first main circumferential groove 141 opening onto the rolling surface, and a second semi-tread 42 which extends axially from the median plane 130 toward a second axial edge 46 of the tread.

The tyre further comprises an additional stiffening reinforcement 151 comprising a plurality of textile or metal thread-like reinforcing elements that are directed "substantially radially", that is to say which make an angle greater than or equal to 60° (and preferably 80°) and less than or equal to 90° with the circumferential direction. This additional stiffening reinforcement 151 lies radially on the inside of the carcass reinforcement 60 and in direct radial alignment with the first main circumferential groove 141.

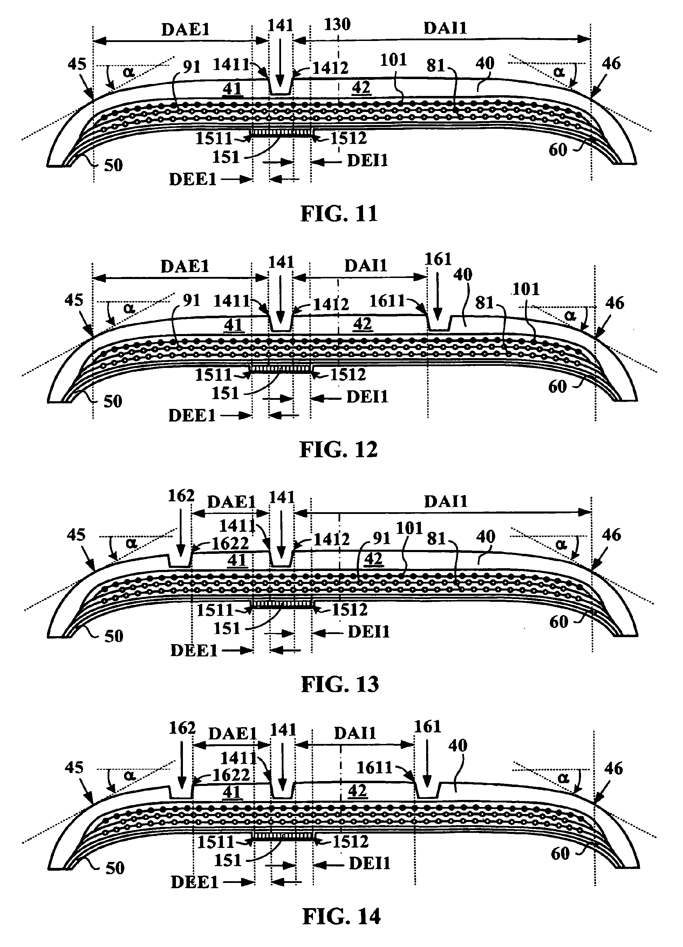

In a tyre according to an embodiment of the invention, the axial width of the additional stiffening reinforcement 151 is carefully limited. It extends both axially outside of the axially outermost point 1411 of the first main circumferential groove 141 and axially on the inside of the axially innermost point 1412 of the first main circumferential groove 141. The precise criteria are illustrated in Figures 11 to 16.

Figure 11 depicts, in radial cross section, one portion of a tyre 10. In this particular instance, the tread comprises one single first main circumferential groove 141. The additional stiffening reinforcement 151 which lies in direct radial alignment with this groove extends axially on the outside of the axially outermost point 1411 of the first main circumferential groove 141, such that, in any radial cross section, the axial distance DEE1 between the axially outermost point 1511 of the additional stiffening reinforcement 151 and the axially outermost point 1411 of the first main circumferential groove 141 is less than or equal to 75% of the axial distance DAE1. Because there is no circumferential groove opening onto the rolling surface axially between the first main circumferential groove 141 and the first axial edge 45 of the tread 40, this axial distance DAE1 is defined as being the axial distance between the axially outermost point 1411 of the first main circumferential groove 141 and the first axial edge 45 of the tread 40. In this particular instance, DEE1 = 0.1 · DAE1.

Furthermore, the additional stiffening reinforcement 151 extends axially on the inside of the axially innermost point 1412 of the first main circumferential groove 141, such that, in any radial cross section, the axial distance DEI1 between the axially innermost point 1512 of the additional stiffening reinforcement 151 and the axially innermost point 1412 of said first main circumferential groove 141 is less than or equal to 75% of the axial distance DAI1. Because there is no circumferential groove opening onto the rolling surface axially between the first main circumferential groove 141 and the second axial edge 46 of the tread 40, this axial distance DAI1 is defined as being the axial distance between the axially innermost point 1412 of said first main circumferential groove 141 and the second axial edge 46 of the tread 40. In this particular instance, DEI1 = 0.06 - DAI1.

When there is a circumferential groove opening onto the rolling surface axially between the first main circumferential groove 141 and at least one of the axial edges 45, 46 of the tread 40, the definition of the distances DAE1 or DAI1 is different, as explained below.

Figure 12 shows the case where there is an additional circumferential groove 161 opening onto the rolling surface between the first main circumferential groove 141 and the second axial edge 46 of the tread 40. The axial distance DAI1 is then defined as the axial distance between the axially innermost point 1412 of the first main circumferential groove 141, and that point 1611 of said additional circumferential groove 161 that is axially closest to said first main circumferential groove 141. In this particular instance, DEI1 = 0.13 · DAI1. The definition of DAE1 is unchanged by comparison with the situation depicted in Figure 11.

Figure 13 shows a tyre according to an embodiment of the invention. There is an additional circumferential groove 162 opening onto the rolling surface between the first main circumferential groove 141 and the first axial edge 45 of the tread 40. The axial distance DAE1 is then defined as the axial distance between the axially outermost point 1411 of the first main circumferential groove 141 and the axially innermost point 1622 of said additional circumferential groove 162. In this particular instance, DEE1 = 0.29 · DAE1. The definition of DAI1 is unchanged by comparison with the situation depicted in Figure 11.

In general, in this configuration, it is preferable for the distance DEE1 to be less than or equal to 50% of the axial distance between the axially outermost point 1411 of said first main circumferential groove 141 and the axially innermost point 1622 of said additional circumferential groove 162.

Naturally, there may be instances where additional circumferential grooves open onto the rolling surface axially on each side of the first main circumferential groove. Such a situation is depicted in Figure 14. The definition of DAI1 is then again as discussed in respect of Figure 12 and the definition of DAE1 is again as discussed in respect of Figure 13.

Of course, when there are several additional circumferential grooves on one side and/or the other side of the first main circumferential groove, then it is the axially closest additional circumferential groove that is taken into consideration when determining the distances DAE1 and DAI1.

All of the tyres depicted in Figures 10 to 14 have just one additional stiffening reinforcement. Of course, the additional stiffening reinforcement will only play its part correctly if it is positioned on that side of the tyre which, when the tyre is mounted on the vehicle in said predetermined direction of mounting, faces the outside of the vehicle. The configuration with one single additional stiffening reinforcement is therefore particularly well suited to so-called "asymmetric" tyres which have a predetermined direction of mounting so that one sidewall of the tyre is always on the outside of the vehicle. These tyres are generally marked (with "outside" or "inside") to indicate to the user which sidewall of the tyre is to face toward the outside of the vehicle and which side is to face toward the vehicle.

There are also tyres which do not have such a predetermined direction of mounting either because they are quite simply symmetric or because they are "directional". What is meant here by a tyre that is said to be "directional" is that it has a preferred direction of rotation. Such a tyre will be mounted on the vehicle in such a way that its preferred direction of rotation corresponds to the direction of rotation of the tyre as the vehicle moves forward.

Because such tyres do not have any marking indicating that the marked sidewall has to face toward the vehicle (or, as appropriate, has to face toward the outside of the vehicle) it is therefore necessary to provide additional stiffening reinforcements on each side of the median plane of the tyre, particularly in order to obtain the expected effects of the stiffening reinforcement on the integrity of the tread in a bend on each external edge.

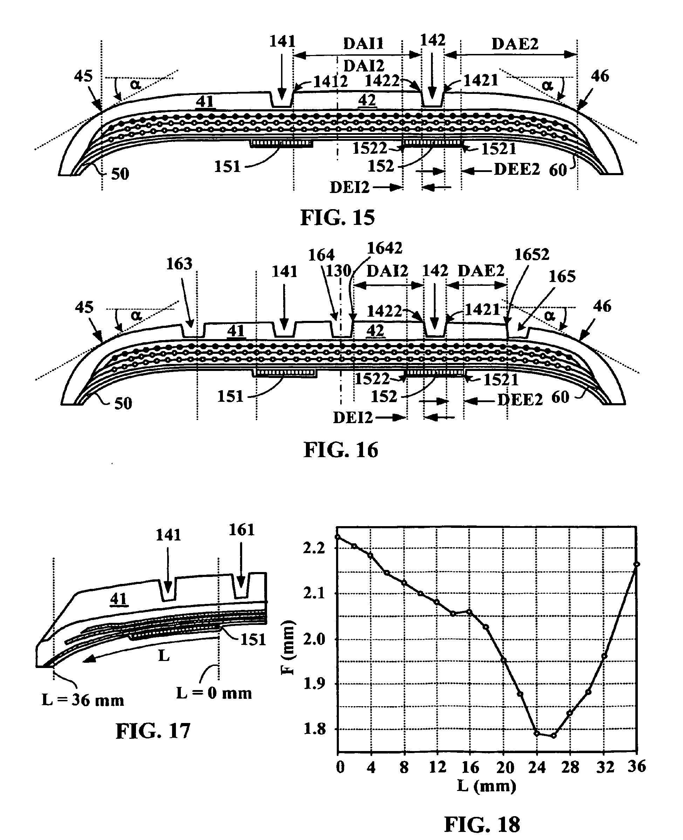

Figure 15 depicts, in radial cross section, a portion of such a tyre. The second semi-tread 42 comprises a second main circumferential groove 142 opening onto the rolling surface and the tyre comprises a second additional stiffening reinforcement 152 comprising a plurality of substantially radially directed thread-like reinforcing elements. This second additional stiffening reinforcement 152 lies radially on the inside of the carcass reinforcement 60 and in direct radial alignment with the second main circumferential groove 142. The second additional stiffening reinforcement 152 extends axially on the outside of the axially outermost point 1421 of said second main circumferential groove 142, such that the axial distance DEE2 between the axially outermost point 1521 of the second additional stiffening reinforcement 152 and the axially outermost point 1421 of said second main circumferential groove 142 is less than or equal to 75% of the axial distance DAE2. Because there is no circumferential groove axially between the second main circumferential groove 142 and the second axial edge 46 of the tread 40, the axial distance DAE2 is defined as being the axial distance between the axially outermost point 1421 of the second main circumferential groove 142 and the second axial edge 46 of the tread.

The second additional stiffening reinforcement 152 extends axially inside the axially innermost point 1422 of the second main circumferential groove 142, such that the axial distance DEI2 between the axially innermost point 1522 of the second additional stiffening reinforcement 152 and the axially innermost point 1422 of said second main circumferential groove 142 is less than or equal to 75% of the axial distance DAI2. Because there is no circumferential groove axially between the second main circumferential groove 142 and the first main circumferential groove 141, the axial distance DAI2 is defined as being the axial distance between the axially innermost point 1422 of the second main circumferential groove 142 and the axially innermost point 1412 of the first main circumferential groove 141. In this particular case DAI1 = DAI2.

Naturally, there may be instances where additional circumferential grooves open onto the rolling surface axially on each side of the first and/or of the second main circumferential groove. A situation such as this is depicted in Figure 16 where the tread comprises three additional circumferential grooves 163 to 165. The definitions of the distances DAI2 and DAE2 therefore change. DAE2 corresponds to the axial distance between the axially outermost point 1421 of said second main circumferential groove 142 and the axially innermost point 1652 of said additional circumferential groove 165 axially between the second main circumferential groove 142 and the second axial edge 46 of the tread. As for the distance DAI2, this is defined as being the axial distance between the axially innermost point 1422 of said second main circumferential groove 142 and that point 1642 of the additional circumferential groove 164 (axially between the second main circumferential groove 142 and the first main circumferential groove 141) that is axially closest to said second main circumferential groove 142.

When the tread 40 is provided with an additional circumferential groove 165 axially between the second main circumferential groove 142 and the second axial edge 46 of the tread 40, the axial distance DEE2 between the axially outermost point 1521 of the second additional stiffening reinforcement 152 and the axially outermost point 1421 of said second main circumferential groove 142 is less than or equal to 50% of the distance DAE2 as defined in the previous paragraph.

Figures 17 and 18 illustrate how important it is to choose the axial width of the additional stiffening reinforcement with care. The graph of Figure 18 shows the deflection F of the crown block of a tyre, part of which is depicted in Figure 17, as a function of the axial width L of the additional stiffening reinforcement. The deflection F is indicated in Figure 9. It characterizes the tilting of the crown block and, as a result, the degradation of the adjacent portions. The optimal width is the width at which the deflection is at a minimum, in this instance 24 to 26 mm. When the width is increased beyond this optimum value, the situation deteriorates again. By increasing the length of the additional stiffening reinforcement to 36 mm, it becomes entirely ineffective.

Rolling tests on 205/55 R 16 tyres (running conditions corresponding to BNNV's "Nürburgring endurance" acceptance tests, well-known to those skilled in the art, involving 20 laps of the old 20 km track in sporty driving) have revealed a very marked reduction in uneven wear by comparison with a tyre that has no stiffening reinforcements.

## Claims

1. Tyre (10) configured to be mounted on a mounting rim of a wheel of a vehicle, comprising:
two beads (20) configured to come into contact with the mounting rim, each bead comprising at least one annular reinforcing structure (70);
two sidewalls (30) extending the beads radially outward, the two sidewalls meeting in a crown (25) comprising a crown reinforcement (80, 90) surmounted by a tread (40) comprising a rolling surface;
at least one carcass reinforcement (60) extending from the beads through the sidewalls as far as the crown, the carcass reinforcement being anchored in the two beads;
in which the tread is divided, by a median plane (130) of the tyre, into:
a first semi-tread (41) which extends axially from said median plane toward a first axial edge (45) of the tread, the first semi-tread comprising a first main circumferential groove (141) opening onto the rolling surface, and
a second semi-tread (42) which extends axially from said median plane toward a second axial edge (46) of the tread,
the tyre further comprising an additional stiffening reinforcement (151) comprising a plurality of substantially radially directed thread-like reinforcing elements, this additional stiffening reinforcement being situated radially on the inside of the carcass reinforcement and in direct radial alignment with said first main circumferential groove, the additional stiffening reinforcement (151) extending axially on the outside of the axially outermost point (1411) of said first main circumferential groove, such that, in any radial cross section, the axial distance DEE1 between the axially outermost point (1511) of the additional stiffening reinforcement and the axially outermost point (1411) of said first main circumferential groove is less than or equal to 75% of an axial distance DAE1, this axial distance DAE1 being defined:
either, if there is no circumferential groove opening onto the rolling surface axially between said first main circumferential groove (141) and said first axial edge (45) of the tread, as the axial distance between the axially outermost point (1411) of said first main circumferential groove and said first axial edge (45) of the tread,
or, if there is an additional circumferential groove (162) opening onto the rolling surface axially between said first main circumferential groove (141) and said first axial edge (45) of the tread, as the axial distance between the axially outermost point (1411) of said first main circumferential groove and the axially innermost point (1622) of said additional circumferential groove, the additional stiffening reinforcement (151) extending axially on the inside of the axially innermost point (1412) of said first main circumferential groove (141), such that, in any radial cross section, the axial distance DEI1 between the axially innermost point (1512) of the additional stiffening reinforcement and the axially innermost point (1412) of said first main circumferential groove (141) is less than or equal to 75% of an axial distance DAI1, this axial distance DAI1 being defined:
either, if there is no circumferential groove opening onto the rolling surface axially between said main circumferential groove (141) and said second axial edge (46) of the tread, as the axial distance between the axially innermost point (1412) of said first main circumferential groove (141) and said second axial edge (46) of the tread,
or, if there is an additional circumferential groove (161) opening onto the rolling surface axially between said first main circumferential groove (141) and said second axial edge (46) of the tread, as the axial distance between the axially innermost point (1412) of said first main circumferential groove (141) and the point (1611) of said additional circumferential groove (161) that is axially closest to said first main circumferential groove,
wherein the tread has an additional circumferential groove (162) opening onto the rolling surface axially between said first main circumferential groove (141) and said first axial edge (45) of the tread, and in which the axial distance DEE1 between the axially outermost point (1511) of the additional stiffening reinforcement (151) and the axially outermost point (1411) of said first main circumferential groove (141) is less than or equal to 50% of the axial distance DAE1 between the axially outermost point (1411) of said first main circumferential groove (141) and the axially innermost point (1622) of said additional circumferential groove (162).

2. Tyre according to Claim 1, in which the carcass reinforcement (60) comprises a plurality of carcass reinforcing elements (61) and in which the carcass reinforcing elements are textile.

3. Tyre according to one of Claims 1 or 2, in which the thread-like reinforcing elements of the additional stiffening reinforcement (151) are made of metal.

4. Tyre according to one of Claims 1 or 2, in which the thread-like reinforcing elements of the additional stiffening reinforcement (151) are textile.

5. Tyre according to one of Claims 1 to 4, In which the tyre has a predetermined direction of mounting, such that the first axial edge (45) of the tread lies on that side of the tyre which, when the tyre is mounted on the vehicle in said predetermined direction of mounting, faces the outside of the vehicle, the tyre being provided with one single additional stiffening reinforcement (151).

6. Tyre according to one of Claims 1 to 5, In which the tyre has a preferred direction of rotation, and in which said second semi-tread (42) has a second main circumferential groove (142) opening onto the rolling surface, the tyre further comprising a second additional stiffening reinforcement (152) comprising a plurality of substantially radially directed thread-like reinforcing elements, this second additional stiffening reinforcement being situated radially on the inside of the carcass reinforcement (60) and in direct radial alignment with said second main circumferential groove (142),
the second additional stiffening reinforcement (152) extending axially on the outside of the axially outermost point (1421) of said second main circumferential groove (142), such that, In any radial cross section, the axial distance DEE2 between the axially outermost point (1521) of the second additional stiffening reinforcement (152) and the axially outermost point (1421) of said second main circumferential groove (142) is less than or equal to 75% of the axial distance DAE2, this axial distance DAE2 being defined:
either, if there is no circumferential groove axially between said second main circumferential groove (142) and said second axial edge (46) of the tread, as the axial distance between the axially outermost point of said second main circumferential groove (142) and said second axial edge (46) of the tread,
or, if there is an additional circumferential groove (165) axially between said second main circumferential groove (142) and said second axial edge (46) of the tread, as the axial distance between the axially outermost point (1421) of said second main circumferential groove (142) and the axially innermost point (1652) of said additional circumferential groove (165),
the second additional stiffening reinforcement (152) extending axially on the inside of the axially Innermost point (1422) of said second main circumferential groove (142), such that, in any radial cross section, the axial distance DEI2 between the axially innermost point (1522) of the second additional stiffening reinforcement (152) and the axially innermost point (1422) of said second main circumferential groove (142) is less than or equal to 75% of the axial distance DAI2, this axial distance DAI2 being defined:
either, if there is no circumferential groove axially between said second main circumferential groove (142) and said first main circumferential groove (141), as the axial distance between the axially innermost point (1422) of said second main circumferential groove (142) and the axially innermost point (1412) of said first main circumferential groove (141),
or, if there is an additional circumferential groove (164) axially between said second main circumferential groove (142) and said first main circumferential groove (141), as the axial distance between the axially innermost point (1422) of said second main circumferential groove (142) and that point (1642) of this additional circumferential groove (164) that is axially closest to said second main circumferential groove (142).

7. Tyre according to Claim 6, in which the tread Is provided with an additional circumferential groove (165) axially between said second main circumferential groove (142) and said second axial edge (46) of the tread, and in which the axial distance DEE2 between the axially outermost point (1521) of the second additional stiffening reinforcement (152) and the axially outermost point (1421) of said second main circumferential groove (142) is less than or equal to 50% of the axial distance DAE2 between the axially outermost point (1421) of said second main circumferential groove (142) and the axially innermost point (1652) of said additional circumferential groove (165).

## Patentansprüche

1. Reifen (10), der dafür ausgebildet ist, auf einer Montagefelge eines Rades eines Fahrzeugs montiert zu werden, und aufweist:
zwei Wülste (20), die dafür ausgebildet sind, mit der Montagefelge in Kontakt zu kommen, wobei jeder Wulst mindestens eine ringförmige Verstärkungsstruktur (70) aufweist;
zwei Seitenwände (30), welche die Wülste radial nach außen verlängern, wobei sich die zwei Seitenwände in einer Krone (25) treffen, die eine Kronenverstärkung (80, 90) aufweist, über der ein Laufstreifen (40) angebracht ist, der eine Rollfläche aufweist;
mindestens eine Karkassenverstärkung (60), die sich von den Wülsten durch die Seitenwände hindurch bis zu der Krone erstreckt, wobei die Karkassenverstärkung in den zwei Wülsten verankert ist;
wobei der Laufstreifen durch eine Mittelebene (130) des Reifens aufgeteilt ist in:
eine erste Laufstreifenhälfte (41), welche sich von der Mittelebene aus axial in Richtung eines ersten axialen Randes (45) des Laufstreifens erstreckt, wobei die erste Laufstreifenhälfte eine erste Hauptumfangsrille (141) aufweist, die sich zu der Rollfläche hin öffnet, und
eine zweite Laufstreifenhälfte (42), welche sich von der Mittelebene aus axial in Richtung eines zweiten axialen Randes (46) des Laufstreifens erstreckt,
wobei der Reifen ferner eine zusätzliche Versteifungsverstärkung (151) aufweist, die mehrere im Wesentlichen radial ausgerichtete fadenartige Verstärkungselemente aufweist, wobei diese zusätzliche Versteifungsverstärkung radial auf der Innenseite der Karkassenverstärkung und in direkter radialer Ausrichtung mit der ersten Hauptumfangsrille angeordnet ist,
wobei sich die zusätzliche Versteifungsverstärkung (151) axial auf der Außenseite des axial äußersten Punktes (1411) der ersten Hauptumfangsrille derart erstreckt, dass in einem beliebigen radialen Querschnitt der axiale Abstand DEE1 zwischen dem axial äußersten Punkt (1511) der zusätzlichen Versteifungsverstärkung und dem axial äußersten Punkt (1411) der ersten Hauptumfangsrille kleiner als oder gleich 75 % eines axialen Abstands DAE1 ist, wobei dieser axiale Abstand DAE1 definiert ist:
entweder, falls keine Umfangsrille vorhanden ist, die sich axial zwischen der ersten Hauptumfangsrille (141) und dem ersten axialen Rand (45) des Laufstreifens zu der Rollfläche hin öffnet, als der axiale Abstand zwischen dem axial äußersten Punkt (1411) der ersten Hauptumfangsrille und dem ersten axialen Rand (45) des Laufstreifens,
oder, falls eine zusätzliche Umfangsrille (162) vorhanden ist, die sich axial zwischen der ersten Hauptumfangsrille (141) und dem ersten axialen Rand (45) des Laufstreifens zu der Rollfläche hin öffnet, als der axiale Abstand zwischen dem axial äußersten Punkt (1411) der ersten Hauptumfangsrille und dem axial innersten Punkt (1622) der zusätzlichen Umfangsrille, wobei sich die zusätzliche Versteifungsverstärkung (151) axial auf der Innenseite des axial innersten Punktes (1412) der ersten Hauptumfangsrille (141) derart erstreckt, dass in einem beliebigen radialen Querschnitt der axiale Abstand DEI1 zwischen dem axial innersten Punkt (1512) der zusätzlichen Versteifungsverstärkung und dem axial innersten Punkt (1412) der ersten Hauptumfangsrille (141) kleiner als oder gleich 75 % eines axialen Abstands DAI1 ist, wobei dieser axiale Abstand DAI1 definiert ist:
entweder, falls keine Umfangsrille vorhanden ist, die sich axial zwischen der Hauptumfangsrille (141) und dem zweiten axialen Rand (46) des Laufstreifens zu der Rollfläche hin öffnet, als der axiale Abstand zwischen dem axial innersten Punkt (1412) der ersten Hauptumfangsrille (141) und dem zweiten axialen Rand (46) des Laufstreifens,
oder, falls eine zusätzliche Umfangsrille (161) vorhanden ist, die sich axial zwischen der ersten Hauptumfangsrille (141) und dem zweiten axialen Rand (46) des Laufstreifens zu der Rollfläche hin öffnet, als der axiale Abstand zwischen dem axial innersten Punkt (1412) der ersten Hauptumfangsrille (141) und dem Punkt (1611) der zusätzlichen Umfangsrille (161), welcher der ersten Hauptumfangsrille axial am nächsten ist, wobei der Laufstreifen eine zusätzliche Umfangsrille (162) aufweist, die sich axial zwischen der ersten Hauptumfangsrille (141) und dem ersten axialen Rand (45) des Laufstreifens zu der Rollfläche hin öffnet, und wobei der axiale Abstand DEE1 zwischen dem axial äußersten Punkt (1511) der zusätzlichen Versteifungsverstärkung (151) und dem axial äußersten Punkt (1411) der ersten Hauptumfangsrille (141) kleiner als oder gleich 50 % des axialen Abstands DAE1 zwischen dem axial äußersten Punkt (1411) der ersten Hauptumfangsrille (141) und dem axial innersten Punkt (1622) der zusätzlichen Umfangsrille (162) ist.

2. Reifen nach Anspruch 1, wobei die Karkassenverstärkung (60) mehrere Karkassenverstärkungselemente (61) aufweist und wobei die Karkassenverstärkungselemente textile Elemente sind.

3. Reifen nach einem der Ansprüche 1 oder 2, wobei die fadenartigen Verstärkungselemente der zusätzlichen Versteifungsverstärkung (151) aus Metall hergestellt sind.

4. Reifen nach einem der Ansprüche 1 oder 2, wobei die fadenartigen Verstärkungselemente der zusätzlichen Versteifungsverstärkung (151) textile Elemente sind.

5. Reifen nach einem der Ansprüche 1 bis 4, wobei der Reifen eine vorbestimmte Montagerichtung aufweist, so dass der erste axiale Rand (45) des Laufstreifens auf derjenigen Seite des Reifens liegt, welche, wenn der Reifen am Fahrzeug in der vorbestimmten Montagerichtung montiert ist, der Außenseite des Fahrzeugs zugewandt ist, wobei der Reifen mit einer einzigen zusätzlichen Versteifungsverstärkung (151) versehen ist.

6. Reifen nach einem der Ansprüche 1 bis 5, wobei der Reifen eine vorbestimmte Drehrichtung aufweist, und wobei die zweite Laufstreifenhälfte (42) eine zweite Hauptumfangsrille (142) aufweist, die sich zu der Rollfläche hin öffnet, wobei der Reifen ferner eine zweite zusätzliche Versteifungsverstärkung (152) aufweist, die mehrere im Wesentlichen radial ausgerichtete fadenartige Verstärkungselemente aufweist, wobei diese zweite zusätzliche Versteifungsverstärkung radial auf der Innenseite der Karkassenverstärkung (60) und in direkter radialer Ausrichtung mit der zweiten Hauptumfangsrille (142) angeordnet ist,
wobei sich die zweite zusätzliche Versteifungsverstärkung (152) axial auf der Außenseite des axial äußersten Punktes (1421) der zweiten Hauptumfangsrille (142) derart erstreckt, dass in einem beliebigen radialen Querschnitt der axiale Abstand DEE2 zwischen dem axial äußersten Punkt (1521) der zweiten zusätzlichen Versteifungsverstärkung (152) und dem axial äußersten Punkt (1421) der zweiten Hauptumfangsrille (142) kleiner als oder gleich 75 % des axialen Abstands DAE2 ist, wobei dieser axiale Abstand DAE2 definiert ist:
entweder, falls keine Umfangsrille axial zwischen der zweiten Hauptumfangsrille (142) und dem zweiten axialen Rand (46) des Laufstreifens vorhanden ist, als der axiale Abstand zwischen dem axial äußersten Punkt der zweiten Hauptumfangsrille (142) und dem zweiten axialen Rand (46) des Laufstreifens,
oder, falls eine zusätzliche Umfangsrille (165) axial zwischen der zweiten Hauptumfangsrille (142) und dem zweiten axialen Rand (46) des Laufstreifens vorhanden ist, als der axiale Abstand zwischen dem axial äußersten Punkt (1421) der zweiten Hauptumfangsrille (142) und dem axial innersten Punkt (1652) der zusätzlichen Umfangsrille (165),
wobei sich die zweite zusätzliche Versteifungsverstärkung (152) axial auf der Innenseite des axial innersten Punktes (1422) der zweiten Hauptumfangsrille (142) derart erstreckt, dass in einem beliebigen radialen Querschnitt der axiale Abstand DEI2 zwischen dem axial innersten Punkt (1522) der zweiten zusätzlichen Versteifungsverstärkung (152) und dem axial innersten Punkt (1422) der zweiten Hauptumfangsrille (142) kleiner als oder gleich 75 % des axialen Abstands DAI2 ist, wobei dieser axiale Abstand DAI2 definiert ist:
entweder, falls keine Umfangsrille axial zwischen der zweiten Hauptumfangsrille (142) und der ersten Hauptumfangsrille (141) vorhanden ist, als der axiale Abstand zwischen dem axial innersten Punkt (1422) der zweiten Hauptumfangsrille (142) und dem axial innersten Punkt (1412) der ersten Hauptumfangsrille (141),
oder, falls eine zusätzliche Umfangsrille (164) axial zwischen der zweiten Hauptumfangsrille (142) und der ersten Hauptumfangsrille (141) vorhanden ist, als der axiale Abstand zwischen dem axial innersten Punkt (1422) der zweiten Hauptumfangsrille (142) und demjenigen Punkt (1642) dieser zusätzlichen Umfangsrille (164), welcher der zweiten Hauptumfangsrille (142) axial am nächsten ist.

7. Reifen nach Anspruch 6, wobei der Laufstreifen mit einer zusätzlichen Umfangsrille (165) axial zwischen der zweiten Hauptumfangsrille (142) und dem zweiten axialen Rand (46) des Laufstreifens versehen ist, und wobei der axiale Abstand DEE2 zwischen dem axial äußersten Punkt (1521) der zweiten zusätzlichen Versteifungsverstärkung (152) und dem axial äußersten Punkt (1421) der zweiten Hauptumfangsrille (142) kleiner als oder gleich 50 % des axialen Abstands DAE2 zwischen dem axial äußersten Punkt (1421) der zweiten Hauptumfangsrille (142) und dem axial innersten Punkt (1652) der zusätzlichen Umfangsrille (165) ist.

## Revendications

1. Pneumatique (10) destiné à être monté sur une jante de montage d'une roue d'un véhicule, comportant :
deux bourrelets (20) destinés à entrer en contact avec la jante de montage, chaque bourrelet comportant au moins une structure annulaire de renforcement (70) ;
deux flancs (30) prolongeant les bourrelets radialement vers l'extérieur, les deux flancs s'unissant dans
un sommet (25) comprenant une armature de sommet (80, 90), surmontée d'une bande de roulement (40) comportant une surface de roulement ;
au moins une armature de carcasse (60) s'étendant depuis les bourrelets à travers les flancs jusqu'au sommet, l'armature de carcasse étant ancrée dans les deux bourrelets ;
dans lequel la bande de roulement est partagée, par le plan médian (130) du pneumatique, en :
une première demi-bande de roulement (41) qui s'étend axialement dudit plan médian vers un premier bord axial (45) de la bande de roulement, la première demi-bande de roulement comportant une première rainure circonférentielle principale (141) débouchant sur la surface de roulement, et
une seconde demi-bande de roulement (42) qui s'étend axialement dudit plan médian vers un second bord axial (46) de la bande de roulement,
le pneumatique comportant en outre une armature supplémentaire de rigidification (151) comportant une pluralité d'éléments de renforcement filaires, orientés substantiellement radialement, cette armature supplémentaire de rigidification se trouvant radialement à l'intérieur de l'armature de carcasse et à l'aplomb radialement de ladite première rainure circonférentielle principale,
l'armature supplémentaire de rigidification (151) s'étendant axialement à l'extérieur du point (1411) axialement le plus à l'extérieur de ladite première rainure circonférentielle principale, de sorte que, dans toute coupe radiale, la distance axiale DEE1 entre le point (1511) axialement le plus à l'extérieur de l'armature supplémentaire de rigidification et le point (1411) axialement le plus à l'extérieur de ladite première rainure circonférentielle principale est inférieure ou égale à 75 % d'une distance axiale DAE1, cette distance axiale DAE1 étant définie comme :
soit, si aucune rainure circonférentielle débouchant sur la surface de roulement n'est située axialement entre ladite première rainure circonférentielle principale (141) et ledit premier bord axial (45) de la bande de roulement, la distance axiale entre le point (1411) axialement le plus à l'extérieur de ladite première rainure circonférentielle principale et ledit premier bord axial (45) de la bande de roulement,
soit, si une rainure circonférentielle supplémentaire (162) débouchant sur la surface de roulement est située axialement entre ladite première rainure circonférentielle principale (141) et ledit premier bord axial (45) de la bande de roulement, la distance axiale entre le point (1411) axialement le plus à l'extérieur de ladite première rainure circonférentielle principale et le point (1622) axialement le plus à l'intérieur de ladite rainure circonférentielle supplémentaire,
l'armature supplémentaire de rigidification (151) s'étendant axialement à l'intérieur du point (1412) axialement le plus à l'intérieur de ladite première rainure circonférentielle principale (141), de sorte que, dans toute coupe radiale, la distance axiale DEI1 entre le point (1512) axialement le plus à l'intérieur de l'armature supplémentaire de rigidification et le point (1412) axialement le plus à l'intérieur de ladite première rainure circonférentielle principale (141) est inférieure ou égale à 75 % d'une distance axiale DAI1, cette distance axiale DAI1 étant définie comme :
soit, si aucune rainure circonférentielle débouchant sur la surface de roulement n'est située axialement entre ladite première rainure circonférentielle principale (141) et ledit second bord axial (46) de la bande de roulement, la distance axiale entre le point (1412) axialement le plus à l'intérieur de ladite première rainure circonférentielle principale (141) et ledit second bord axial (46) de la bande de roulement,
soit, si une rainure circonférentielle supplémentaire (161) débouchant sur la surface de roulement est située axialement entre ladite première rainure circonférentielle principale (141) et ledit second bord axial (46) de la bande de roulement, la distance axiale entre le point (1412) axialement le plus à l'intérieur de ladite première rainure circonférentielle principale (141) et le point (1611) de ladite rainure circonférentielle supplémentaire (161) qui est axialement le plus proche de ladite première rainure circonférentielle principale,
dans lequel la bande de roulement est pourvue d'une rainure circonférentielle supplémentaire (162) débouchant sur la surface de roulement, située axialement entre ladite première rainure circonférentielle principale (141) et ledit premier bord axial (45) de la bande de roulement, et dans lequel la distance axiale DEE1 entre le point (1511) axialement le plus à l'extérieur de l'armature supplémentaire de rigidification (151) et le point (1411) axialement le plus à l'extérieur de ladite première rainure circonférentielle principale (141) est inférieure ou égale à 50 % de la distance axiale DAE1 entre le point (1411) axialement le plus à l'extérieur de ladite première rainure circonférentielle principale (141) et le point (1622) axialement le plus à l'intérieur de ladite rainure circonférentielle supplémentaire (162).

2. Pneumatique selon la revendication 1, dans lequel l'armature de carcasse (60) comporte une pluralité d'éléments de renforcement (61) de carcasse et dans lequel les éléments de renforcement de carcasse sont textiles.

3. Pneumatique selon l'une des revendications 1 ou 2, dans lequel les éléments de renforcement filaires de l'armature supplémentaire de rigidification (151) sont métalliques.

4. Pneumatique selon l'une des revendications 1 ou 2, dans lequel les éléments de renforcement filaires de l'armature supplémentaire de rigidification (151) sont textiles.

5. Pneumatique selon l'une des revendications 1 à 4, dans lequel le pneumatique a un sens de montage prédéterminé, de sorte que le premier bord axial (45) de la bande de roulement se situe du côté du pneumatique tourné, lorsque le pneumatique est monté sur le véhicule selon ledit sens de montage prédéterminé, vers l'extérieur du véhicule, le pneumatique étant pourvu d'une seule armature supplémentaire de rigidification (151).

6. Pneumatique selon l'une des revendications 1 à 5, dans lequel le pneumatique a un sens de rotation préférentiel, et dans lequel ladite seconde demi-bande de roulement (42) comporte une deuxième rainure circonférentielle principale (142) débouchant sur la surface de roulement, le pneumatique comportant en outre une deuxième armature supplémentaire de rigidification (152) comportant une pluralité d'éléments de renforcement filaires, orientés substantiellement radialement, cette deuxième armature supplémentaire de rigidification se trouvant radialement à l'intérieur de l'armature de carcasse (60) et à l'aplomb radialement de ladite deuxième rainure circonférentielle principale (142),
la deuxième armature supplémentaire de rigidification (152) s'étendant axialement à l'extérieur du point (1421) axialement le plus à l'extérieur de ladite deuxième rainure circonférentielle principale (142), de sorte que, dans toute coupe radiale, la distance axiale DEE2 entre le point (1521) axialement le plus à l'extérieur de la deuxième armature supplémentaire de rigidification et le point (1421) axialement le plus à l'extérieur de ladite deuxième rainure circonférentielle principale (142) est inférieure ou égale à 75 % de la distance axiale DAE2, cette distance axiale DAE2 étant définie comme :
soit, si aucune rainure circonférentielle n'est située axialement entre ladite deuxième rainure circonférentielle principale (142) et ledit second bord axial (46) de la bande de roulement, la distance axiale entre le point axialement le plus à l'extérieur de ladite deuxième rainure circonférentielle principale (142) et ledit second bord axial (46) de la bande de roulement,
soit, si une rainure circonférentielle supplémentaire (165) est située axialement entre ladite deuxième rainure circonférentielle principale (142) et ledit second bord axial (46) de la bande de roulement, la distance axiale entre le point (1421) axialement le plus à l'extérieur de ladite deuxième rainure circonférentielle principale (142) et le point (1652) axialement le plus à l'intérieur de ladite rainure circonférentielle supplémentaire (165),
la deuxième armature supplémentaire de rigidification (152) s'étendant axialement à l'intérieur du point (1422) axialement le plus à l'intérieur de ladite deuxième rainure circonférentielle principale (142), de sorte que, dans toute coupe radiale, la distance axiale DE12 entre le point (1522) axialement le plus à l'intérieur de la deuxième armature supplémentaire de rigidification (152) et le point (1422) axialement le plus à l'intérieur de ladite deuxième rainure circonférentielle principale (142) est inférieure ou égale à 75 % de la distance axiale DAI2, cette distance axiale DAI2 étant définie comme :
soit, si aucune rainure circonférentielle n'est située axialement entre ladite deuxième rainure circonférentielle principale et ladite première rainure circonférentielle principale, la distance axiale entre le point (1422) axialement le plus à l'intérieur de ladite deuxième rainure circonférentielle principale (142) et le point (1412) axialement le plus à l'intérieur de ladite première rainure circonférentielle principale (141),
soit, si une rainure circonférentielle supplémentaire (164) est située axialement entre ladite deuxième rainure circonférentielle principale (142) et ladite première rainure circonférentielle principale (141), la distance axiale entre le point (1422) axialement le plus à l'intérieur de ladite deuxième rainure circonférentielle principale (142) et le point (1642) de cette rainure circonférentielle supplémentaire (164) qui est axialement le plus proche de ladite deuxième rainure circonférentielle principale (142).

7. Pneumatique selon la revendication 6, dans lequel la bande de roulement est pourvue d'une rainure circonférentielle supplémentaire (165) située axialement entre ladite deuxième rainure circonférentielle principale (142) et ledit second bord axial (46) de la bande de roulement, et dans lequel la distance axiale DEE2 entre le point (1521) axialement le plus à l'extérieur de la deuxième armature supplémentaire de rigidification (152) et le point (1421) axialement le plus à l'extérieur de ladite deuxième rainure circonférentielle principale (142) est inférieure ou égale à 50 % de la distance axiale DAE2 entre le point (1421) axialement le plus à l'extérieur de ladite deuxième rainure circonférentielle principale (142) et le point (1652) axialement le plus à l'intérieur de ladite rainure circonférentielle supplémentaire (165).
